# EUROPEAN PATENT APPLICATION

(11) **EP 2 615 537 A1**
(43) Date of publication of application: **17.07.2013**
(21) Application number: 13150805.3
(22) Date of filing: 10.01.2013
(51) Int. Cl.: G06F 3/0488, G06F 3/023

(54) **Method and apparatus for keyboard layout using touch**

(30) Priority: 12.01.2012 KR 20120003831
(71) Applicant: Samsung Electronics Co., Ltd, Gyeonggi-do 443-742 (KR)
(72) Inventor: Hwang, Joo-Won, B-613 Seoul (KR)
(74) Representative: Nederlandsch Octrooibureau

(57) **Abstract**

A method includes selecting a desired keyboard layout by performing a specific touch input within or around a search window of a portable terminal based on the following steps:
detecting a touch input on a predetermined portion of the screen of the portable terminal, said touch input being one of a predetermined set of different touch inputs;
selecting said desired keyboard layout from a plurality of different keyboard layouts in accordance with the detected touch input, each of said different keyboard layouts being associated with a different touch input and
displaying the desired keyboard layout.

## Description

### BACKGROUND OF THE INVENTION

### 1. Field of the Invention

The present invention relates to a keyboard interface. More particularly, the present invention relates to a method and apparatus for changing a keyboard layout in a portable terminal.

### 2. Description of the Related Art

When a user inputs a search word to browse the Internet using a portable terminal, a default keyboard, for example, a Korean keyboard layout is displayed according to an initial setting (when it is set to Korean) in response to touching a search window. If the user desires to change the keyboard layout to English, the keyboard layout is typically changed by using a Korean/English shift key.

Thus, the user needs an additional touch manipulation to input a desired search word, which causes user inconvenience and is ineffective when the user requires a fast search.

### SUMMARY OF THE INVENTION

An aspect of the present invention is to solve at least the above-mentioned problems and/or disadvantages and also provide additional advantages, by providing a method and apparatus for selectively changing a keyboard layout according to a touch input.

Another aspect of the present invention is to provide a method and apparatus for pre-selecting a Korean keyboard layout or an English keyboard layout or a symbol keyboard layout or a number keyboard layout when a search is performed or before a user inputs a character, such as a message input.

Another aspect of the present invention is to provide a method and apparatus for selecting a keyboard layout of a desired language or symbol when a search is performed or before a user inputs a character by detecting a touch input on a search window of the portable terminal, and displaying the desired keyboard layout according to the detected outcome.

In accordance with an aspect of the present invention, a method of selecting a desired keyboard layout in a portable terminal includes:
detecting a touch input on a a predetermined portion of the screen of the portable terminal, said touch input being one of a predetermined set of different touch inputs;
selecting said desired keyboard layout from a plurality of different keyboard layouts in accordance with the detected touch input, each of said different keyboard layouts being associated with a different touch input and
displaying the desired keyboard layout..

In accordance with another aspect of the present invention, a portable terminal apparatus for selecting a desired keyboard layout according to a touch input includes: a display and a controller for detecting the type of the touch input on a search window of the display and displaying the desired keyboard layout according to the detected outcome.

Also, a computer program product and a volatile or non-volatile memory comprising such a computer program product are claimed.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 illustrates a keyboard layout depending on first and second direction touches according to an exemplary embodiment of the present invention;
FIG. 2 illustrates a keyboard layout depending on third and fourth direction touches according to an exemplary embodiment of the present invention;
FIG. 3 illustrates a keyboard layout depending on first and second area touches according to an exemplary embodiment of the present invention;
FIG. 4 is a flowchart illustrating a process of configuring a keyboard layout depending on a direction touch according to an exemplary embodiment of the present invention;
FIG. 5 is a flowchart illustrating a process of changing a keyboard layout depending on a direction touch according to an exemplary embodiment of the present invention;
FIG. 6 is a flowchart illustrating a process of configuring a keyboard layout depending on an area touch according to an exemplary embodiment of the present invention;
FIG. 7 is a flowchart illustrating a process of changing a keyboard layout depending on an area touch according to an exemplary embodiment of the present invention; and
FIG. 8 is a block diagram illustrating a structure of a portable terminal according to an exemplary embodiment of the present invention.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. The scope is defined by the annexed claims and their technical equivalents. In addition, descriptions of well-known functions and configurations may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents. Features of different embodiments and aspects may be combined unless when they are technically incompatible.

It is to be understood that the singular forms "a," "an," and "the" include plural referents unless the context clearly dictates otherwise. Thus, for example, reference to "a component surface" includes reference to one or more of such surfaces.

The present invention relates to a method and apparatus for changing a keyboard layout having a particular language or symbol according to a user touch in a portable terminal.

Hereinafter, exemplary embodiments of the present invention will be described herein below with reference to the accompanying drawings. For the purposes of clarity and simplicity, well-known functions or constructions are not described in detail as they would obscure the invention in unnecessary detail. Also, the terms used herein are defined according to the functions of the present invention. Thus, the terms may vary depending on user's or operator's intention and usage. That is, the terms used herein must be understood based on the descriptions made herein.

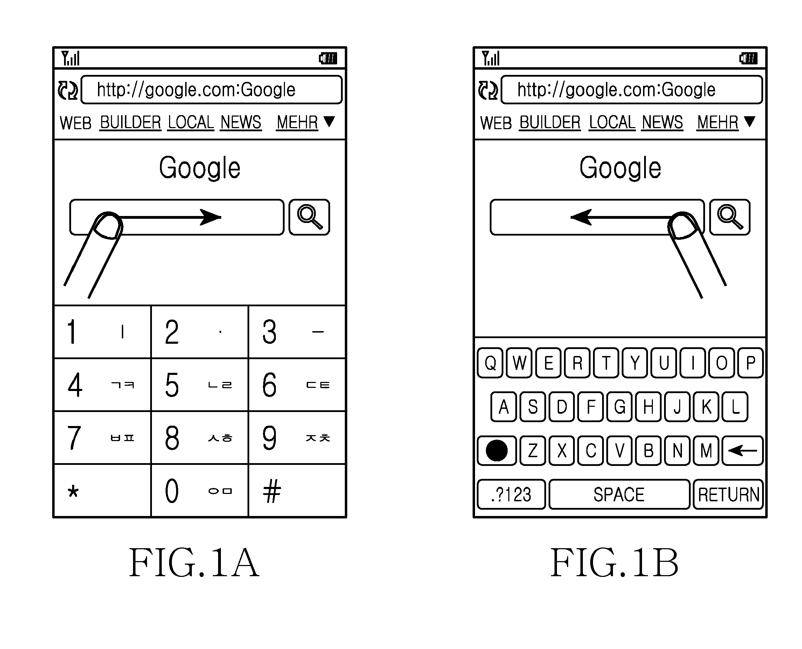

FIGs. 1A, 1B illustrates a keyboard layout depending on first and second direction touches according to an exemplary embodiment of the present invention.

FIG. 1A illustrates a Korean keyboard layout configured for a case of performing a left-to-right touch/slide or drag (hereinafter "a first direction touch") according to the first embodiment of the present invention when a user who intends to perform a search operation by using a portable terminal touches a search window in a left-to-right direction. The search window is defined as an area of a screen where the terminal would display search items input by a user with a keyboard, and to be used in a search on, for instance, the Internet by the terminal upon being instructed to do so by the user in a way known to persons skilled in the art. In FIGs 1A - 3B, this is the elongated area touched by the finger tip.

As shown in FIG. 1A, the terminal provides the user with the option to perform the first direction touch in the search window. The terminal is arranged to detect the first direction touch of the user and upon the detection, to present a Korean style keyboard on the screen, e.g. at the lower side of the screen below the search window as shown. Then, the terminal allows the user to input one or more search terms with this Korean style keyboard and to input an instruction to start the search with these search terms, e.g., by pushing an icon to that effect, like the shown magnifying glass.

FIG. 1B illustrates an English keyboard layout configured for a case of performing a right-to-left touch/slide or drag (hereinafter "a second direction touch") according to the second embodiment of the present invention when a user who intends to perform a search operation by using a portable terminal touches a search window in a right-to-left direction.

As shown in FIG. 1B, the terminal provides the user with the option to perform the second direction touch in the search window. The terminal is arranged to detect the second direction touch of the user and upon the detection, to present an English style keyboard on the screen, e.g. at the lower side of the screen below the search window as shown. Then, the terminal allows the user to input one or more search terms with this English style keyboard and to input an instruction to start the search with these search terms, e.g., by pushing an icon to that effect, like the shown magnifying glass.

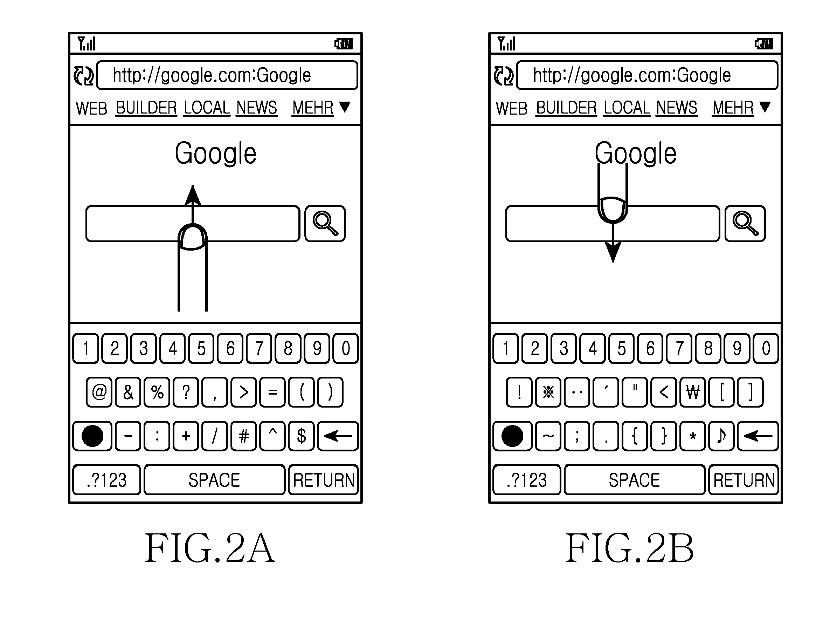

FIGs. 2A, 2B illustrates a keyboard layout depending on third and fourth direction touches according to an exemplary embodiment of the present invention.

FIG. 2A illustrates a first symbol keyboard layout configured for a case of performing a down-to-up touch/slide or drag (hereinafter "a third direction touch") according to the third embodiment of the present invention when a user who intends to perform a search operation by using a portable terminal touches a search window in a down-to-up direction.

As shown in FIG. 2A, the terminal provides the user with the option to perform the third direction touch in the search window. The terminal is arranged to detect the third direction touch of the user and upon the detection, to present a keyboard with characters without letters on the screen, e.g. at the lower side of the screen below the search window as shown. Then, the terminal allows the user to input these characters for search terms with this keyboard and to input an instruction to start the search with the input search terms, e.g., by pushing an icon to that effect, like the shown magnifying glass.

FIG. 2B illustrates a second symbol keyboard layout configured for a case of performing an up-to-down touch/slide or drag (hereinafter "a fourth direction touch") according to the fourth embodiment of the present invention when a user who intends to perform a search operation by using a portable terminal touches a search window in an up-to-down direction.

As shown in FIG. 2B, the terminal provides the user with the option to perform the fourth direction touch in the search window. The terminal is arranged to detect the fourth direction touch of the user and upon the detection, to present a further keyboard with characters without letters on the screen, e.g. at the lower side of the screen below the search window as shown. Then, the terminal allows the user to input these characters for search terms with this keyboard and to input an instruction to start the search with the input search terms, e.g., by pushing an icon to that effect, like the shown magnifying glass.

It should be noted that different embodiments shown in FIGs. 1A, 1B, 2A and 2B are for illustrative purposes, thus other combination of sliding gesture detected on the search window can result in different type of keyboard layout. For example, the first direction touch or slide detected in FIG. 1A can generate another language keyboard other than Korean. Therefore, the illustrative embodiments in the figures should not limit the scope of the invention. Moreover, the teachings of the present invention are also applicable when an input touch or input slide is detected not only within the search window but also around or outside of the search window.

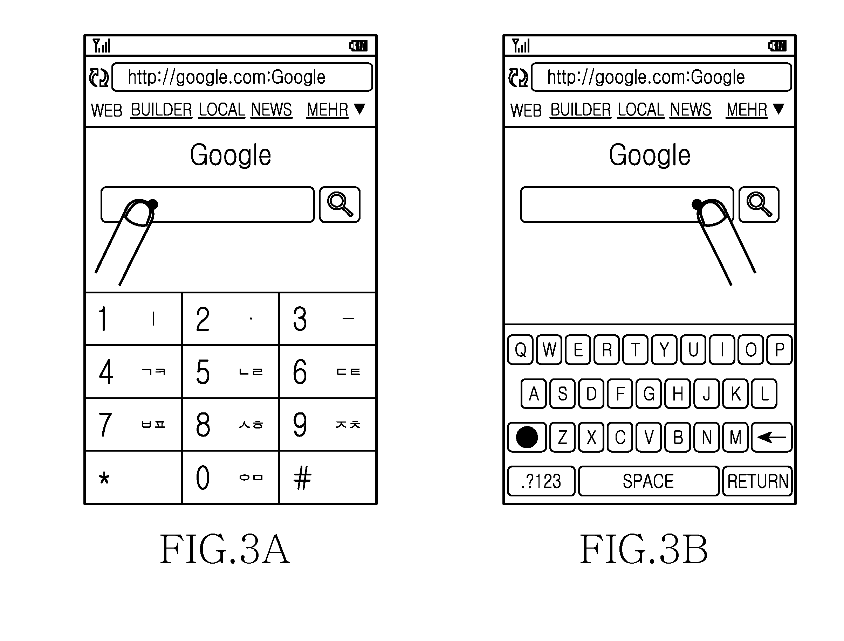

FIGs. 3A, 3B illustrates a keyboard layout depending on first and second area touches according to another exemplary embodiment of the present invention.

FIG. 3A illustrates a Korean keyboard layout configured for a case of touching a left area or a first area touch according to another embodiment of the present invention when a user who intends to perform a search operation by using a portable terminal touches or taps a left side from a center point of a search window.

As shown in FIG. 3A, the terminal provides the user with the option to perform the first area touch in the search window. The terminal is arranged to detect the first area touch of the user and upon the detection, to present a Korean style keyboard on the screen, e.g. at the lower side of the screen below the search window as shown. Then, the terminal allows the user to input one or more search terms with this Korean style keyboard and to input an instruction to start the search with these search terms, e.g., by pushing an icon to that effect, like the shown magnifying glass.

FIG. 3B illustrates an English keyboard layout configured for a case of touching a right area (or a second area touch) according to yet another embodiment of the present invention when a user who intends to perform a search operation by using a portable terminal touches or taps a right side from a center point of a search window.

As shown in FIG. 3B, the terminal provides the user with the option to perform the second area touch in the search window. The terminal is arranged to detect the second area touch of the user and upon the detection, to present an English style keyboard on the screen, e.g. at the lower side of the screen below the search window as shown. Then, the terminal allows the user to input one or more search terms with this English style keyboard and to input an instruction to start the search with these search terms, e.g., by pushing an icon to that effect, like the shown magnifying glass.

Again, it should be noted that different embodiments shown in FIGs 3A, 3B are for illustrative purposes, and another language keyboard layout can be displayed according to the detected touch input within the search window. Thus, the illustrative embodiments in the figures should not limit the scope of the invention. Moreover, the direction touches and area touches explained above need not necessarily be within the search window even though this is a very convenient area since it will not be covered by the keyboard that pops up after such a touch.

Moreover, it is observed that there may be embodiments having a combination of one or more direction touches and one or more area touches.

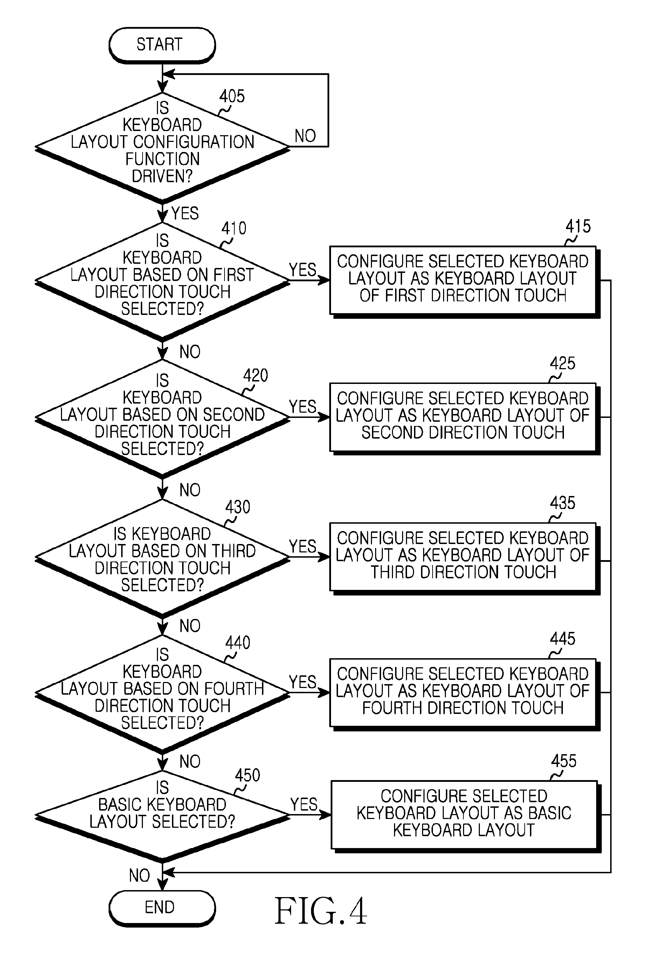

FIG. 4 is a flowchart illustrating a process of configuring a keyboard layout in a portable terminal according to a direction touch detected thereon in accordance with an exemplary embodiment of the present invention.

Referring to FIGs. 1A, 1B, 2A, 2B, 3A, 3B and 4, the terminal checks if a user drives a keyboard layout configuration function (step 405). This function can, e.g., be initiated by a user of the terminal by starting an application (app) and, thus, opening a dialog window on the screen of the terminal with a search window, but still without a keyboard. Such an app may relate to an Internet browser, a specific search engine, or the like.

If the keyboard layout configuration function is active, the portable terminal examines whether the user selects a keyboard layout by performing a first direction touch detected within a search window (step 410). If the user performs the first direction touch, the portable terminal configures a particular keyboard layout to be used corresponding to the first direction touch (step 415).

If the user selects a keyboard layout by performing a second direction touch (step 420), the portable terminal configures a particular keyboard layout corresponding to the second direction touch (step 425).

If the user selects a keyboard layout by performing a third direction touch (step 430), the portable terminal configures a particular keyboard layout corresponding to the third direction touch (step 435).

If the user selects a keyboard layout by performing a fourth direction touch in the portable terminal (step 440), the portable terminal configures a particular keyboard layout corresponding to the fourth direction touch (step 445).

If the user simply touches the search window (step 450), the portable terminal configures a particular keyboard layout corresponding to the simple touch (step 455).

After having configured the keyboard layout as selected by the user, the terminal displays this configured keyboard on the screen, preferably below the search window.

The method described above in relation with FIG. 4 of the present invention may be provided as one or more instructions in one or more software modules stored in the respective apparatus, such as a portable terminal.

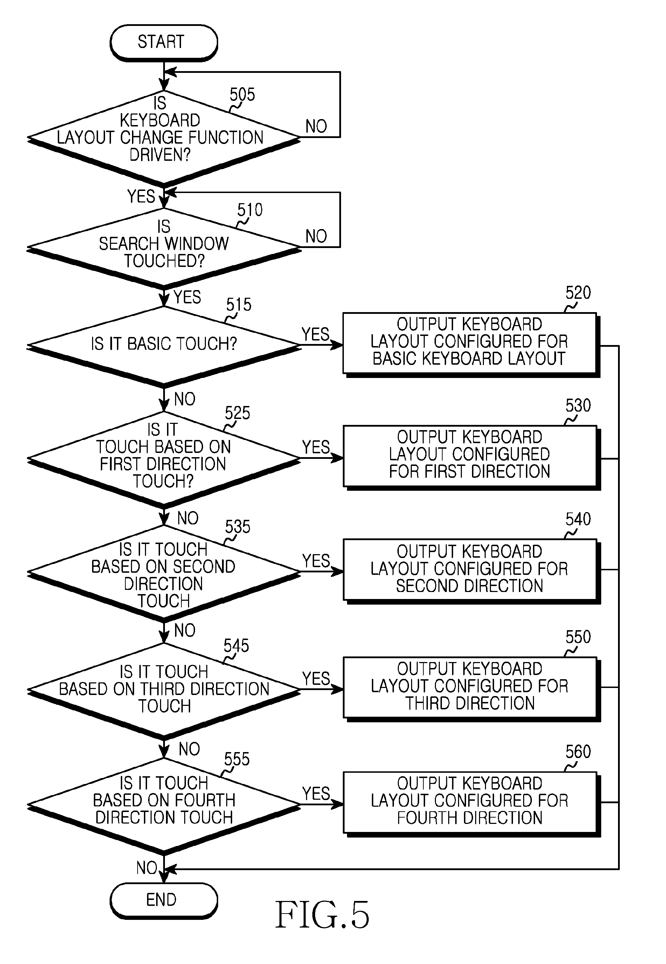

FIG. 5 is a flowchart illustrating a process of changing a keyboard layout depending on a direction touch according to an exemplary embodiment of the present invention.

Referring to FIGs. 1A, 1B, 2A, 2B, 3A, 3B and 5, the terminal checks if a user drives a keyboard layout change function (step 505) and, if so, if the user touches a displayed search window (step 510). If so, a keyboard layout configured for a touch direction or a touch area is output in accordance with any of the steps 515, 525, 535, 545, or 555.

When the user touches or taps the search window (step 510), and if the touch on the search window is a basic touch (step 515), the portable terminal outputs a keyboard layout corresponding to a basic keyboard layout (step 520). Herein the basic touch denotes the aforementioned simple touch.

If the touch input detected on the search window is a first direction touch (step 525), the portable terminal outputs a keyboard layout corresponding to the first direction touch (step 530).

If the touch input detected on the search window is a second direction touch (step 535), the portable terminal outputs a keyboard layout corresponding to the second direction touch (step 540).

If the touch input detected on the search window is a third direction touch (step 545), the portable terminal outputs a keyboard layout corresponding to the third direction touch (step 550).

If the touch input on the search window is a fourth direction touch (step 555), the portable terminal outputs a keyboard layout corresponding to the fourth direction touch (step 560).

After having configured the keyboard layout as selected by the user, the terminal displays this configured keyboard on the screen, preferably below the search window.

Although the touch inputs defined by the first to fourth directions are described in the present invention for illustrative purposes as being touches in a single direction, the configuration and utilization for the directions are also applicable with touches in any other number of directions.

The method described above in relation with FIG. 5 of the present invention may be provided as one or more instructions in one or more software modules stored in the respective apparatus, such as a portable terminal.

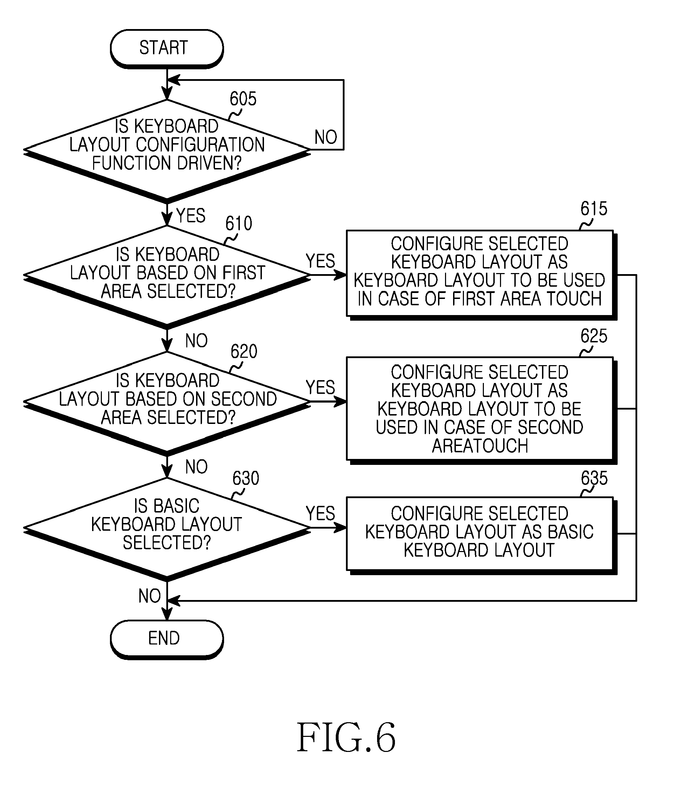

FIG. 6 is a flowchart illustrating a process of configuring a keyboard layout in a portable terminal depending on the location of a touch detected thereon according to an exemplary embodiment of the present invention.

Referring to FIGs. 3A, 3B and 6, if a user drives a keyboard layout configuration function (step 605), a portable terminal examines whether the user selects a keyboard layout based on a first area touch (step 610). Such a process denotes a process of selecting a keyboard layout to be used when the user touches the first area of a search window. If the user selects the keyboard layout to be used in case of the first area touch, the portable terminal configures a particular keyboard layout corresponding to the first area touch (step 615).

The terminal checks whether the user selects a keyboard layout based on a second area touch in the portable terminal (step 620). Such a case denotes a process of selecting the keyboard layout to be used when the user touches the second area of the search window. If so, the portable terminal configures a particular keyboard layout corresponding to the second area touch (step 625).

If the user selects a basic keyboard layout in the portable terminal (step 630) by touching a center point of the search window, the portable terminal configures a basic keyboard layout (step 635).

After having configured the keyboard layout as selected by the user, the terminal displays this configured keyboard on the screen, preferably below the search window.

The method described above in relation with FIG. 6 under of the present invention may be provided as one or more instructions in one or more software modules stored in the respective apparatus, such as a portable terminal.

It is observed that the methods explained with reference to the FIGs cannot only be used to configure and display a keyboard for the first time when a dialog screen is displayed but also to change an already displayed keyboard.

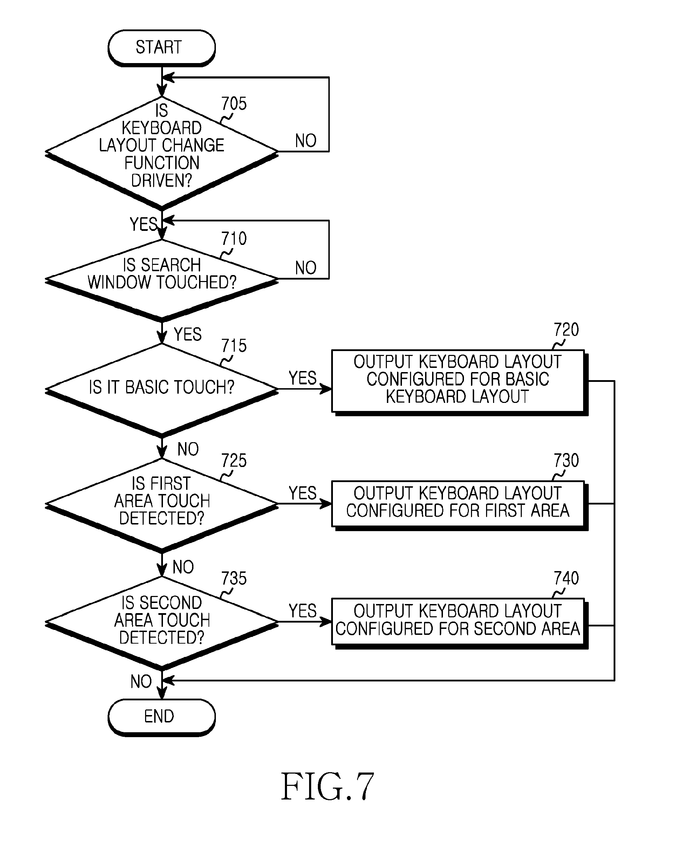

FIG. 7 is a flowchart illustrating a process of changing a keyboard layout depending on an area touch according to an exemplary embodiment of the present invention.

Referring to FIGs. 3A, 3B and 7, the terminal checks if a user drives a keyboard layout change function (step 705), and, if so, if the user touches a displayed search window (step 710). If so, a keyboard layout configured for a touch direction or a touch area is output in accordance with any of the steps 715, 725, or 735.

When the user touches the search window (step 710), and if the touch on the search window is a basic touch (step 715), the portable terminal outputs a keyboard layout configured as the basic keyboard layout (step 720). Herein, the basic touch denotes the aforementioned center touch of the search window.

If the touch detected on the search window is a first area touch (step 725), the portable terminal outputs a keyboard layout corresponding to the first area touch (step 730).

If the touch detected on the search window is a second area touch (step 735), the portable terminal outputs a keyboard layout corresponding to the second area touch (step 740).

Although three different touch input locations are described in the present invention for illustrative purposes as being single touch input locations at specified locations, the configuration and utilization for the areas are also applicable to any other number of touch inputs at different locations of the search window.

The method described above in relation with FIG. 7 under of the present invention may be provided as one or more instructions in one or more software modules stored in the respective apparatus, such as a portable terminal.

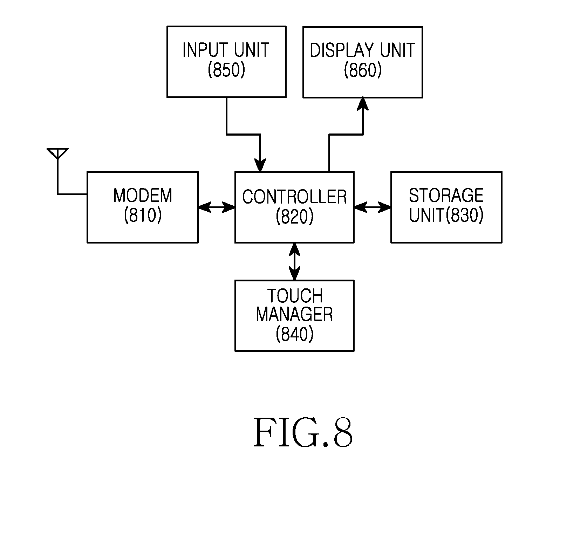

FIG. 8 is a block diagram illustrating a structure of a portable terminal according to an exemplary embodiment of the present invention.

Referring to FIG. 8, the portable terminal includes a modem 810, a controller 820, a storage unit 830, a touch manager 840, an input unit 850, and a display unit 860.

The modem 810 includes a radio processor, a baseband processor, etc. for communicating with other devices. The radio processor converts a signal received through an antenna into a baseband signal and provides the converted signal to the baseband processor. Further, the radio processor converts a baseband signal received from the baseband processor into a radio signal so that it can be transmitted via the air, and transmits the converted signal through the antenna.

The controller 820 provides an overall control to the portable terminal and may be integrated with the touch manager 840 as a single unit. The controller 820 performs the functions explained in detail in the above specification when running a program stored in the storage unit 830.

The storage unit 830 stores one or more programs comprising instructions and data relating to the functionality of the controller 820 for controlling an overall operation of the portable terminal and stores temporary data generated while performing the program(s).

The input unit 850 provides a touch input of the user to the controller 820 or the touch manager 840 and may be a touch screen. However, the input unit 850 may also comprise one or more physical keys.

The display unit 860 displays an output of the controller 820. The display unit 860 may be a Liquid Crystal Display (LCD), or Light Emitting Diode (LED) or other display devices known to those skilled in the art. In an advantageous embodiment, the display unit 860 comprises the touch screen of the input unit 850.

With reference to FIG 4, the touch manager 840 may perform the following functionality.

If a user drives a keyboard layout configuration function, the touch manager 840 examines whether the user selects a keyboard layout based on a first direction touch. Such a process denotes a process of selecting a keyboard layout to be used when the user touches a search window in the first direction. If the user selects the keyboard layout to be used in case of the first direction touch, the touch manager 840 configures the selected keyboard layout as the keyboard layout to be used in case of the first direction touch.

If the user selects a keyboard layout based on a second direction touch, the touch manager 840 configures the selected keyboard layout as a keyboard layout to be used in case of the second direction touch.

If the user selects a keyboard layout based on a third direction touch, the touch manger 840 configures the selected keyboard layout as the keyboard layout to be used in case of the third direction touch.

If the user selects a keyboard layout based on a fourth direction touch, the touch manager 840 configures the selected keyboard layout as the keyboard layout to be used in the fourth direction touch.

If the user selects a basic keyboard layout, the touch manager 840 configures the selected keyboard layout as the keyboard layout to be used in the simple touch.

With reference to FIG 5, the touch manager 840 may perform the following functionality.

The touch manager 840 checks if the user drives a keyboard layout change function and if the user touches a search window. If so, a keyboard layout configured based on a touch direction or a touch area is output on display unit 860 by controller 820.

When the user touches the search window, if the touch on the search window is a basic touch (herein, the basic touch denotes the aforementioned simple touch), the touch manager 840 outputs a keyboard layout configured as the basic keyboard layout.

If the touch on the search window is a touch based on a first direction, the touch manager 840 outputs a keyboard layout configured for the first direction.

If the touch on the search window is a touch based on a second direction, the touch manager 840 outputs a keyboard layout configured for the second direction.

If the touch on the search window is a touch based on a third direction, the touch manager 840 outputs a keyboard layout configured for the third direction.

If the touch on the search window is a touch based on a fourth direction, the touch manager 840 outputs a keyboard layout configured for the fourth direction.

With reference to FIG 6, the touch manager 840 may perform the following functionality.

If the user drives a keyboard layout configuration function, the touch manager 840 examines whether the user selects a keyboard layout based on a first area touch (such a process denotes a process of selecting a keyboard layout to be used when the user touches the first area of the search window). If the user selects the keyboard layout to be used in case of the first area touch, the touch manager 840 configures the selected keyboard as the keyboard layout to be used in case of the first area touch.

If the user selects a keyboard layout based on a second area touch, the touch manager 840 configures the selected keyboard layout as the keyboard layout to be used in case of the second area touch.

If the user selects a basic keyboard layout, the touch manager 840 configures the selected keyboard layout as a basic keyboard layout.

With reference to FIG 7, the touch manager 840 may perform the following functionality.

If the user drives a keyboard layout change function, the touch manger 840 examines whether the user touches the search window.

When the user touches the search window, if the touch on the search window is a basic touch, the touch manager 840 outputs a keyboard layout configured as the basic keyboard layout.

If the touch on the search window is a touch based on a first area, the touch manager 840 outputs a keyboard layout configured for the first area.

If the touch on the search window is a touch based on a second area, the touch manager 840 outputs a keyboard layout configured for the second area

The portable terminal may be an electronic device such as, for example, a laptop, a smart phone, a net book, a mobile internet device, an ultra mobile PC, a tablet personal computer, a mobile telecommunication terminal, PDA having a camera and the like herein, just to name some of the possibilities

According to the teachings of the present invention, a user can selectively select a desired keyboard layout with a desired language or symbol by performing a specific touch input or touch, thereby providing convenience to the user and also facilitating an effective input environment for faster input.

The above-described methods according to the present invention can be implemented in hardware, firmware or as software or computer code that can be stored in a recording medium such as a CD ROM, a RAM, a floppy disk, a hard disk, an USB stick or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the present invention has been particularly shown and described with reference to exemplary embodiments thereof, it will be understood by those skilled in the art that various changes in form and details may be made therein without departing from the scope of the present invention as defined by the appended claims and their technical equivalents.

## Claims

1. A method of selecting a desired keyboard layout in a screen of a portable terminal from a plurality of keyboard layouts, the method comprising:
detecting a touch input on a a predetermined portion of the screen of the portable terminal, said touch input being one of a predetermined set of different touch inputs;
selecting said desired keyboard layout from a plurality of different keyboard layouts in accordance with the detected touch input, each of said different keyboard layouts being associated with a different touch input and
displaying the desired keyboard layout.

2. The method of claim 1, wherein the predetermined portion of the screen is a search window.

3. The method according to claim 2, comprising after displaying the desired keyboard function:
allowing a user to input one or more search terms with said desired keyboard layout;
displaying these search terms in said search window; and
using these search terms in a search upon being instructed to do so by said user.

4. The method of claim 1, 2 or 3, wherein the touch input is one of a drag, a slide and a tap.

5. The method of claim 4, wherein if the detected outcome is a tap at one of a left portion, a center portion, and a right portion of the search window, the method comprises displaying a particular keyboard layout according to the detected tap location.

6. The method of claim 4, wherein if the detected outcome is a slide touch input and is one of a left-to-right direction slide, a right-to-left direction slide, a down-to-up direction slide, and an up-to-down direction slide, the method comprises displaying a particular keyboard layout according to the detected slide touch.

7. The method of any of the claims 1-6, wherein the desired keyboard layout is one of a Korean keyboard layout, an English keyboard layout, a symbol keyboard layout, and a number keyboard layout.

8. A portable terminal for selecting a keyboard layout according to a touch input, comprising:
a display unit;
a input unit configured to provide a touch input to a controller; and
the controller configured to perform the method according to any of the claims 1-7.

9. A computer program product comprising instructions and data configured to cause, when executed by a processor of an electronic device, the electronic device to perform the method of any of claims 1-7.

10. A volatile or non-volatile memory storing a computer program product as claimed in claim 9.
